# EUROPEAN PATENT APPLICATION

(11) **EP 1 672 047 A1**
(43) Date of publication of application: **21.06.2006**
(21) Application number: 04773333.2
(22) Date of filing: 14.09.2004
(51) Int. Cl.: C09K 3/00, G02B 5/22, C08L 101/00, C08L 29/14, C08K 3/00

(54) **ABSORPTIVE COMPOSITION FOR INFRARED RAY AND ABSORPTIVE RESIN COMPOSITION FOR INFRARED RAY**

(30) Priority: 26.09.2003 JP 2003335702
(71) Applicant: Kureha Corporation, Tokyo 103-8552 (JP)
(72) Inventor: UEDA, Rumi, c/o Iwaki Factory, Iwaki-shi, Fukushima 974-8686 (JP); KOBAYASHI, Yutaka, c/o Iwaki Factory, Iwaki-shi, Fukushima 974-8686 (JP)
(74) Representative: HOFFMANN EITLE
(86) International application number: PCT/JP2004/013714
(87) International publication number: WO 2005/030898

(57) **Abstract**

An infrared-absorbing composition and an infrared-absorbing resin composition, each containing an infrared absorbent composed of a divalent ionic copper compound, a blackening phenomenon by ultraviolet rays beings prevented or inhibited and stably retain excellent visible ray-transmitting property and infrared-absorbing property being retained stably over a long period of time, and applied products thereof are provided.

The infrared-absorbing composition contains the infrared absorbent composed of the divalent ionic copper compound and an anti-blackening agent composed of a metal salt compound. The resin composition is obtained by containing the infrared absorbent and anti-blackening agent in a resin component. The divalent ionic copper compound is preferably a phosphorus-containing copper compound. The metal salt compound as the anti-blackening agent is a compound of a metal selected from alkali metals, alkaline earth metals and transition metals. Examples of the applied products include molded or formed products, sheets, films, intermediate films for laminated glass, infrared-absorbing composites and window materials.

## Description

### TECHNICAL FIELD

The present invention relates to an infrared-absorbing composition and an infrared-absorbing resin composition making good use of infrared-absorbing property of a divalent copper ion.

### BACKGROUND ART

In some cases, window materials for lighting windows in buildings such as houses, window materials for vehicles such as automobiles, aircrafts and ships, light-transmitting materials for building of greenhouses, or the like may be required to have inhibited infrared-transmitting property by themselves for the purpose of inhibiting rise in interior or indoor temperature by transmission of infrared rays.

For example, by using a material that has low infrared-transmitting property as a window material of an automobile, the interior of the automobile is prevented from becoming high temperature even when it is exposed to direct sunlight, while by using the material that has low infrared-transmitting property as a window material of a house, a high cooling effect is achieved.

An infrared-absorbing resin obtained by containing a divalent ionic copper compound in a light-transmitting resin material making good use of the property that a divalent copper ion absorbs light having a wavelength in a near infrared region at a high efficiency has been proposed as a material for achieving such objects (see, for example, Patent Reference 1).

Patent Reference 1: Japanese Patent Application Laid-Open No. 211220/1998

When the light resistance of a window material having an infrared-absorbing resin layer obtained by containing the ionic copper compound in the light-transmitting resin material has been investigated, however, it has been found that the window material causes a blackening phenomenon that a great number of fine black spots occur in the infrared-absorbing resin layer when the window material is irradiated with ultraviolet rays over a long period of time.

In the window material on which such a blackening phenomenon has occurred, its visible ray transmittance is lowered, thereby a visibility through the window material is lowered, and so when it is an automotive window material, it may form the cause of an accident.

### DISCLOSURE OF THE INVENTION

The present invention has been made on the basis of the foregoing circumstances and has as its object the provision of an infrared-absorbing composition which contains an infrared absorbent composed of a divalent ionic copper compound and stably retains excellent infrared-absorbing property over a long period of time by being prevented or inhibited from causing a blackening phenomenon by ultraviolet rays.

Another object of the present invention is to provide an infrared-absorbing resin composition which contains an infrared absorbent composed of a divalent ionic copper compound, and stably retains excellent visible ray-transmitting property and infrared-absorbing property over a long period of time by being prevented or inhibited from causing a blackening phenomenon by ultraviolet rays.

According to the present invention, there is provided an infrared-absorbing composition comprising an infrared absorbent composed of a divalent ionic copper compound and an anti-blackening agent composed of a metal salt compound for preventing a blackening phenomenon due to the infrared absorbent.

In the above infrared-absorbing composition, the metal salt compound making up the anti-blackening agent may preferably be a compound of at least one metal selected from alkali metals, alkaline earth metals and transition metals, particularly preferably a compound of lithium, sodium, potassium, cesium, magnesium, calcium or manganese.

In the above infrared-absorbing composition, the divalent ionic copper compound may preferably be a phosphorus-containing copper compound.

A phosphorus compound contained in the phosphorus-containing copper compound may preferably be an alkyl phosphate, and the alkyl phosphate may preferably be a compound the alkyl group of which has 4 to 18 carbon atoms.

According to the present invention, there is provided an infrared-absorbing resin composition comprising a resin component, and an infrared absorbent composed of a divalent ionic copper compound and an anti-blackening agent composed of a metal salt compound for preventing a blackening phenomenon due to the infrared absorbent, which are contained in the resin component.

In above the infrared-absorbing resin composition, it may be preferable that a proportion of the infrared absorbent be 0.1 to 45 parts by mass per 100 parts by mass of the resin component, and a proportion of the anti-blackening agent be 0.01 to 200 % by mass based on a divalent copper ion in the infrared absorbent.

In the above infrared-absorbing resin composition, the resin component may preferably comprise a resin having an acetal structure, and the resin component may particularly preferably comprise a polyvinyl acetal resin.

In the infrared-absorbing resin composition according to the present invention, the metal salt compound making up the anti-blackening agent may preferably be a compound of at least one metal selected from alkali metals, alkaline earth metals and transition metals, particularly preferably a compound of lithium, sodium, potassium, cesium, magnesium, calcium or manganese.

In the infrared-absorbing resin composition, the divalent ionic copper compound may preferably be a phosphorus-containing copper compound.

A phosphorus compound contained in the phosphorus-containing copper compound may preferably be an alkyl phosphate, and the alkyl phosphate may preferably be a compound the alkyl group of which has 4 to 18 carbon atoms.

### EFFECTS OF THE INVENTION

According to the present invention, there is provided an infrared-absorbing composition in which excellent infrared-absorbing property is exhibited by the divalent copper ion, the occurrence of the blackening phenomenon is prevented by containing the anti-blackening agent composed of the metal salt compound even when irradiated with ultraviolet rays over a long period of time, and accordingly, the excellent infrared-absorbing property is stably retained over a long period of time.

According to the present invention, there is also provided an infrared-absorbing resin composition in which excellent infrared-absorbing property is exhibited by the divalent copper ion, the occurrence of the blackening phenomenon is prevented by containing the anti-blackening agent composed of the metal salt compound even when irradiated with ultraviolet rays over a long period of time, and accordingly, the excellent visible ray-transmitting property and infrared-absorbing property are stably retained over a long period of time.

The occurrence of the blackening phenomenon is prevented even when irradiated with ultraviolet rays over a long period of time by using such an infrared-absorbing resin composition. Accordingly, applied products, which stably retain the excellent visible ray-transmitting property and infrared-absorbing property over a long period of time, are provided.

More specifically, infrared-absorbing resinous molded or formed products; infrared-absorbing sheets and infrared-absorbing films having such preferable optical properties as described above can be provided. In addition, coating compositions for forming infrared-absorbing thin films having such preferable optical properties as described above can be provided.

According to the infrared-absorbing resin compositions, intermediate films for laminated glass can be provided, and so laminated glass and window materials having such preferable optical properties as described above can be provided. In addition, infrared-absorbing composites can be formed by using materials such as the above-described infrared-absorbing resinous molded or formed products, infrared-absorbing sheets and infrared-absorbing films. According to such composites, materials having such preferable optical properties as described above can be provided, and these materials are useful as, for example, building materials.

### BRIEF DESCRIPTION OF THE DRAWINGS

Fig. 1 typically illustrates an exemplary sectional structure of a laminated glass.
Fig. 2 typically illustrates an exemplary sectional structure of a laminated glass having a reflective layer.
Fig. 3 typically illustrates an exemplary sectional structure of a laminated glass having a reflective layer between a plurality of layers provided between light-transmitting base plates.
Fig. 4 illustrates a photograph of Sample 4 according to Example 4 after irradiation of ultraviolet rays.
Fig. 5 illustrates a photograph of Referential Sample 1 according to Referential Example 1 after irradiation of ultraviolet rays.

### [Description of Characters]

- 1: A pair of light-transmitting base plates
- 2: 2 Intermediate film
- 10: Laminated glass
- 20: Laminated glass
- 21: Light-transmitting base plate
- 22: Infrared-absorbing layer
- 23: Reflective layer
- 30: Laminated glass
- 31: Light-transmitting bases plates
- 32: Infrared-absorbing layers
- 33: Reflective layer
- 34: Resin layer

### BEST MODE FOR CARRYING OUT THE INVENTION

The present invention will hereinafter be described in detail.

The infrared-absorbing composition according to the present invention comprises a divalent ionic copper compound and an anti-blackening agent composed of a metal salt compound, and the infrared-absorbing resin composition according to the present invention contains the infrared-absorbing composition which is, for example, dissolved or dispersed in a resin component composed of a proper resin.

In the present invention, the occurrence of the blackening phenomenon due to a chemical change of the infrared absorbent composed of a divalent ionic copper compound, which is caused by ultraviolet rays, is prevented by coexistence of the anti-blackening agent composed of a metal salt compound with the infrared absorbent in a field where the infrared absorbent is present. As a result, the infrared-absorbing effect brought about by the infrared absorbent can be stably exhibited over a long period of time.

Further, the occurrence of the blackening phenomenon due to the infrared absorbent is inhibited, whereby the infrared-absorbing resin composition is prevented from greatly lowering its visible ray-transmitting property. Accordingly, the excellent visible ray-transmitting property is retained over a long period of time.

The infrared-absorbing resin composition that is an ordinary embodiment of the present invention will hereinafter be described specifically.

### [Infrared absorbent]

The infrared absorbent in the present invention is composed of a divalent ionic copper compound and develops optical properties characteristic of the divalent copper ion. The divalent copper ion, however, exhibits marked light-absorbing property in an infrared region approximately from 700 to 1,000 nm in wavelength in a system coexisting with a phosphorus compound in particular. In addition, the solubility or dispersibility of the ionic copper compound in a resin is improved by the coexistence of the phosphorous compound.

In the composition according to the present invention, a copper salt may be used as a source of supply of the copper ion. No particular limitation is imposed on the copper salt, and any salt may be used. As specific examples thereof, may be mentioned anhydrides or hydrates of copper salts of organic acids, such as copper acetate, copper formate, copper stearate, copper benzoate, copper ethylacetoacetate, copper pyrophosphate, copper naphthenate and copper citrate, anhydrides or hydrates of copper salts of inorganic acids, such as copper chloride, copper sulfate, copper nitrate and basic copper carbonate, and besides copper hydroxide and copper oxide. Among these, copper acetate, copper acetate monohydrate, copper benzoate, copper hydroxide and basic copper carbonate are preferably used. Incidentally, these copper salts that are sources of the copper ion may be used either singly or in any combination thereof.

### [Phosphorus-containing copper compound]

In the infrared absorbent in the present invention, the divalent ionic copper compound is preferably a phosphorus-containing copper compound. A phosphorus compound is used for obtaining this phosphorus-containing copper compound. This phosphorus compound specifically means a compound having a monovalent group represented by the following formula (A) or a divalent group represented by the following formula (B). In the infrared-absorbing resin composition finally obtained by using these phosphorus compounds, the infrared-absorbing property is made suitable from the viewpoint of absorption wavelength range, and moreover the solubility or dispersibility of the ionic copper compound in the resin can be improved.

As examples of this phosphorus compound, may be mentioned phosphate compounds represented by the following formulae (1) and (2), phosphonic acid compounds represented by the following formula (3), phosphonate compounds represented by the following formula (4) and phosphinic acid compounds represented by the following formula (5).

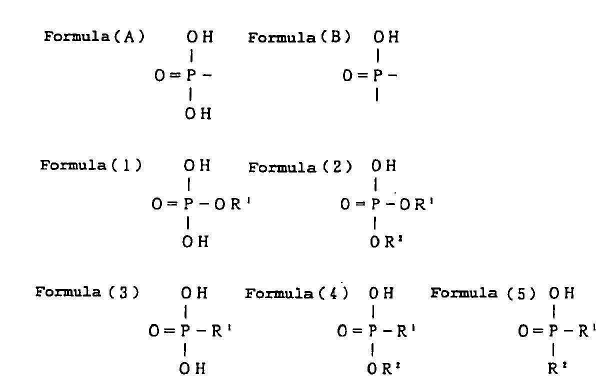

In each of the formulae, R¹ and R² are the same or different from each other and individually denote an alkyl group, alkenyl group, alkynyl group, aryl group, allyl group, oxyalkyl group, polyoxyalkyl group, oxyaryl group, polyoxyaryl group, acyl group, aldehyde group, carboxyl group, hydroxyl group, (meth)acryloyl group, (meth)acryloyloxyalkyl group, (meth)acryloylpolyoxyalkyl group or ester group having 1 to 30 carbon atoms. In these groups, at least one hydrogen atom thereof may be substituted by a halogen atom, oxyalkyl group, polyoxyalkyl group, oxyaryl group, polyoxyaryl group, acyl group, aldehyde group, carboxyl group, hydroxyl group, (meth)acryloyl group, (meth)acryloyloxyalkyl group, (meth)acryloylpolyoxyalkyl group or ester group.

As specific examples of the phosphate compounds, may be mentioned monomethyl phosphate, dimethyl phosphate, monoethyl phosphate, diethyl phosphate, monoisopropyl phosphate, diisopropyl phosphate, mono-n-butyl phosphate, di-n-butyl phosphate, monobutoxyethyl phosphate, dibutoxyethyl phosphate, mono(2-ethylhexyl) phosphate, di(2-ethylhexyl) phosphate, mono-n-decyl phosphate, di-n-decyl phosphate, monoisodecyl phosphate, diisodecyl phosphate, monooleyl phosphate, dioleyl phosphate, monoisostearyl phosphate, diisostearyl phosphate, monophenyl phosphate and diphenyl phosphate.

As examples of the phosphonate compounds, may be mentioned monomethylmethyl phosphonate, monoethylethyl phosphonate, monobutylbutyl phosphonate and mono (2-ethylhexyl)-2-ethylhexyl phosphonate.

In the present invention, as the phosphorus compound is particularly preferably used an alkyl phosphate that R¹ in the formula (1), or R¹ and R² in the formula (2) are alkyl groups. In this case, the alkyl group has preferably 4 to 18 carbon atoms, more preferably 6 to 18 carbon atoms. Di- and/or mono(2-ethylhexyl) phosphate and di- and/or monooleyl phosphate are particularly preferred.

In the present invention, the phosphorus compounds may be used not only singly, but also in combination of 2 or more compounds thereof.

A proportion of the infrared absorbent contained in the infrared-absorbing resin composition is 0.1 to 45 parts by mass, preferably 1 to 35 parts by mass, particularly preferably 2 to 25 parts by mass per 100 parts by mass of the resin component.

A proportion of the phosphorus compound contained is preferably 1 to 10 mol per mol of the divalent copper ion in the infrared absorbent.

### [Anti-blackening agent]

In the present invention, the anti-blackening agent composed of a metal salt compound is contained in a state dissolved or dispersed in the resin component together with the infrared absorbent. This anti-blackening agent prevents or inhibits the occurrence of a blackening phenomenon that a great number of fine black spots occur in the resin component, which is a matrix, when the infrared absorbent is exposed to irradiation of ultraviolet rays over a long period of time.

In the present invention, a metal salt compound of at least one metal selected from alkali metals, alkaline earth metals and transition metals is used as the anti-blackening agent. Specifically, a metal salt compound of lithium, sodium, potassium, cesium, magnesium, calcium or manganese is used.

This metal salt compound preferably has high affinity for and stable solubility or dispersibility in the resin component used and is preferably a metal salt compound of any of various organic acids or inorganic acids. As examples of the organic acids, may be mentioned acetic acid, propionic acid, butyric acid, stearic acid, sorbic acid, thiocarbonic acid, sulfonic acid, trifluoroacetic acid, phthalic acid, lauric acid, lactic acid, benzoic acid and others. As examples of the inorganic acids, may be mentioned carbonic acid, bicarbonic acid, thiocyanic acid, boric acid, sulfuric acid, phosphoric acid and others.

As specific preferable examples of metal salt compounds used as the anti-blackening agent, may be mentioned lithium acetate (LiOCOCH₃), sodium acetate (NaOCOCH₃), sodium benzoate (NaOCOC₆H₅), sodium carbonate (Na₂CO₃), sodium bicarbonate (NaHCO₃), potassium acetate (KOCOCH₃), potassium benzoate (KOCOC₆H₅), potassium carbonate (K₂CO₃), potassium bicarbonate (KHCO₃), cesium acetate (CsOCOCH₃), calcium acetate (Ca(OCOCH₃)₂), magnesium acetate (Mg(OCOCH₃)₂), manganese acetate (MnOCOCH₃), anhydrides and hydrates thereof, and others.

In the present invention, a proportion of the anti-blackening agent contained is 0.01 to 200 % by mass, preferably 0.01 to 100 % by mass, particularly preferably 0.1 to 50 % by mass based on the divalent copper ion in the infrared absorbent.

The anti-blackening agent is preferably contained in a proportion of 0.001 to 5.0 parts by mass per 100 parts by mass of the resin component.

If the proportion of the anti-blackening agent contained is too high, the resulting resin composition may become cloudy to lower its clearness in some cases. If the proportion is too low on the other hand, the effect to prevent the blackening phenomenon may not be actually exhibited in some cases.

### [Resin component]

In the infrared-absorbing resin composition according to the present invention, the resin component forms a matrix as a medium in which the infrared-absorbing composition composed of the divalent ionic copper compound and anti-blackening agent is dissolved or dispersed. No particular limitation is imposed on the specific kind of the resin so far as it can function as such a matrix.

A resin material used as the resin component preferably has light-transmitting property, and it further preferably has specified properties from the viewpoint of practical use. A resin having characteristic properties, for example, molding or forming ability, film-forming ability, adhesiveness, thermo- or photo-settability and the like may be used as the resin material, thereby providing applied products making good use of the properties of this resin material.

As specific examples of the resin material, may be mentioned resins having an acetal structure, such as polyvinyl acetal resins, ethylene-vinyl acetate copolymer resins, acrylic resins, polyolefin resins, styrene resins, fluoro resins, epoxy resins, urethane resins, alkyd resins, amino resins, polyester resins, cellulose resins and others.

In the present invention, a preferable resin varies according to uses thereof. For example, an acrylic resin or the like is used for an applied product utilizing light-transmitting property, while a polyvinyl acetal resin is preferably used when adhesiveness is utilized.

The polyvinyl acetal resin can be obtained by acetalizing polyvinyl alcohol with aldehyde.

As examples of the aldehyde used in the acetalization, may be mentioned propionaldehyde, n-butylaldehyde, isobutylaldehyde, n-pentylaldehyde and n-hexylaldehyde. These compounds may be used either singly or in any combination thereof.

A polyvinyl butyral resin obtained by acetalizing with n-butylaldehyde having 4 carbon atoms is preferably used for an intermediate film of which adhesiveness is required.

### [Plasticizer]

The infrared-absorbing resin composition according to the present invention may contain a plasticizer having excellent compatibility with the resin in some cases. As examples of the plasticizer, may be mentioned phosphate plasticizers, phthalic acid plasticizers, fatty acid plasticizers and glycol plasticizers. As specific examples thereof, may be mentioned triethylene glycol di-2-ethylhexanoate (3GO), triethylene glycol di-2-ethylbutyrate (3GH), dihexyl adipate (DHA), tetraethylene glycol diheptanoate (4G7), tetraethylene glycol di-2-ethylhexanoate (4GO) and triethylene glycol diheptanoate (3G7). These compounds may be used either singly or in any combination thereof.

### [Additives]

Various additives may be added to the infrared-absorbing resin composition according to the present invention as needed. As examples of the additives, may be mentioned ultraviolet absorbents, antioxidants and others. A visible ray absorbent may preferably be added in some cases.

### [Applied product]

The infrared-absorbing resin composition described above may be used as a material or component for various practically useful products or members according to the kind of the resin material making up the resin component by utilizing the physical or chemical properties that the resin material has. This applied product is prevented from causing the blackening phenomenon even when irradiated with ultraviolet rays over a long period of time, and thus stably retains excellent visible ray-transmitting property and infrared-absorbing property over a long period of time.

Specifically, a moldable or formable resin is used as the resin component, whereby an infrared-absorbing resinous molded or formed product can be provided. When a resin capable of forming a film is used as the resin component, whereby an infrared-absorbing sheet or infrared-absorbing film is provided.

On the other hand, a solution or dispersion obtained by dissolving or dispersing the infrared-absorbing resin composition in a proper solvent is useful as a coating composition for forming an infrared-absorbing thin film.

The solvent varies according to the kind of the resin component. However, as examples thereof, may be mentioned hydrocarbon compounds such as toluene, xylene, hexane and heptane, alcohols such as methyl alcohol, ethyl alcohol, isopropyl alcohol and butyl alcohol, esters such as ethyl acetate, isopropyl acetate, butyl acetate and butyl acetate cellosolve, ketones such as acetone, methyl ethyl ketone, methyl isobutyl ketone and cyclohexanone, ethers such as butyl cellosolve, and others.

A sheet or film formed of the infrared-absorbing resin composition according to the present invention is useful as an intermediate film for laminated glass. The intermediate film is used to laminate 2 light-transmitting base plates such as transparent glass plates, thereby obtaining a laminated glass. This laminated glass is useful as a window material for forming windows of a vehicle such as an automobile or a building such as a house.

A sheet formed by the infrared-absorbing resin composition according to the present invention making use of, for example, a polyvinyl butyral resin as the resin component is useful as an intermediate film for adhesion. A laminated glass suitably used as a window material in automobiles or buildings can be produced by using this film.

More specifically, a polyvinyl butyral resin material, an infrared absorbent composed of a divalent ionic copper compound or phosphorus-containing copper compound, an anti-blackening agent and necessary additives are mixed in respective proper proportions, kneaded and formed to produce a sheet, this sheet is sandwiched between 2 transparent glass plates to form a sandwich-like laminate, and this laminate is heat-treated, whereby a laminated glass formed of the 2 transparent glass plates adhered by the sheet can be produced.

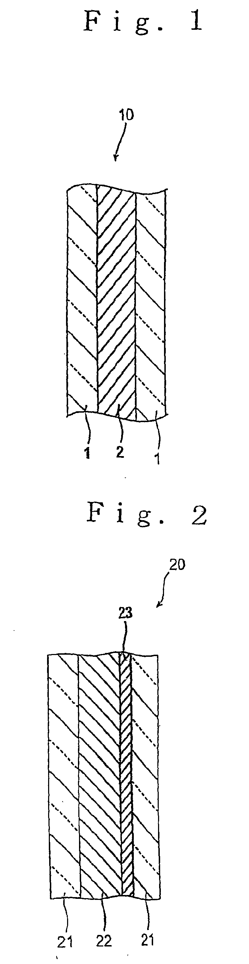

A preferable laminated glass will hereinafter be described with reference to Fig. 1.

Fig. 1 typically illustrates an exemplary sectional structure of the laminated glass. The laminated glass 10 illustrated in Fig. 1 comprises a pair of light-transmitting base plates 1 and an intermediate film 2 sandwiched between this pair of light-transmitting base plates 1. The intermediate film 2 is an infrared-absorbing layer formed of the above-described infrared-absorbing resin composition.

No particular limitation is imposed on a material for forming the light-transmitting bases 1 so far as it has visible ray-transmitting property, and a proper material is used according to the application. More specifically, glass or a plastic is used from the viewpoints of hardness, heat resistance, chemical resistance, durability, etc. Examples of the glass include inorganic glass and organic glass. As examples of the plastic, may be mentioned polycarbonate, acrylonitrile-styrene copolymers, polymethyl methacrylate, vinyl chloride resins, polystyrene, polyester, polyolefin, norbornene resins and others. The 2 light-transmitting base plates 1 may be formed of the same material or different materials from each other.

The laminated glass 10 of such a structure can be produced in accordance with, for example, a process in which a sheet-like formed product formed of the infrared-absorbing resin composition is held between a set of light-transmitting base plates for preliminarily compression bonding, thereby removing air remaining between individual layers, and they are then subjected to thermo compression bonding to closely bond them.

Incidentally, when the laminated glass 10 is produced by such a production process, the intermediate film 2 is required not to cause the so-called blocking phenomenon that sheets stick on each other during their storage to become a lump and to have good deaerating ability in the preliminary bonding under pressure. When these requirements are satisfied, operating property upon the lamination between the light-transmitting base plates 1 and the sheet is improved. In addition, lowering of light-transmitting property due to bubbles generated by, for example, insufficient deaeration can be prevented.

Such a laminated glass 10 is required to have excellent light-transmitting property, i.e., the property of transmitting light in a visible region, in addition to the property of cutting off light in a near infrared region. In order to achieve such excellent light-transmitting property, it is preferable to eliminate bubbles between the light-transmitting base plates 1 and the intermediate film 2 to the utmost as described above.

As a means for reducing bubbles, is known a method of using an intermediate film 2 having, on its surfaces, a great number of fine irregularities called emboss. According to such an embossed intermediate film 2, the deaerating ability in the step of preliminary bonding under pressure or the like becomes extremely good. As a result, the resulting laminated glass 10 becomes little in lowering of light-transmitting property due to bubbles.

Forms of such emboss include various kinds of irregularity patterns composed of a great number of projected parts and a great number of recessed parts corresponding to these projected parts, various kinds of irregularity patterns composed of a great number of projected strips and a great number of recessed grooves corresponding to these projected strips, and embossed forms having a variety of values relating to various form factors such as roughness, arrangement and size.

Examples of these embossed forms include a form that specified in the size and arrangement of projected parts as described in Japanese Patent Application Laid-Open No. 198809/1994 by changing the size thereof, a form that surface roughness is controlled to 20 to 50 µm as described in Japanese Patent Application Laid-Open No. 40444/1997, a form that projected strips are arranged so as to intersect each other as described in Japanese Patent Application Laid-Open No. 295839/1997, and a form that smaller projected parts are additionally formed on main projected parts as described in Japanese Patent Application Laid-Open No. 2003-48762.

Other properties required of laminated glass in recent years have included sound-insulating property. According to a laminated glass excellent in sound-insulating property, the influence of ambient noise or the like can be reduced when it is used as, for example, a window material, whereby, an indoor environment can be further improved. In general, sound-insulating performance is indicated as a quantity of sound transmission loss according to a change in frequency, and the quantity of sound transmission loss is defined by a fixed value according to sound insulation grade in 500 Hz or higher in accordance with JIS A 4708.

However, the sound-insulating performance of a glass plate generally used as a light-transmitting base plate for laminated glass tends to be markedly lowered by a coincidence effect in a frequency region centering on 2,000 Hz. The term "coincidence effect" as used herein means a phenomenon of sound transmission, which occurs as a result that when a sound wave is incident on a glass plate, a transverse wave propagates on the glass plate owing to the rigidity and inertia of the glass plate, and this transverse wave and incident sound resonate. Accordingly, a general laminated glass is hard to avoid the lowering of sound-insulating performance due to such a coincidence effect in the frequency region centering on 2,000 Hz, and so improvement in this respect is required.

Regarding this, the human hearing is known to show very good sensitivity in a range of 1,000 to 6,000 Hz compared with other frequency regions from an equal loudness curve. Accordingly, it is important from the viewpoint of improving soundproof performance to resolve the lowering of the sound-insulating performance due to the coincidence effect. From this point of view, in order to improve the sound-insulating performance of the laminated glass, it is necessary to relieve the lowering of the sound-insulating performance due to the coincidence effect so as to prevent lowering of a minimum portion of the sound transmission loss caused by the coincidence effect.

Examples of methods for imparting sound-insulating property to a laminated glass include a method of increasing the mass of the laminated glass, a method of compositing glass that should become a light-transmitting base plate, a method of fractionating the area of this glass, and a method of improving a means for supporting a glass plate. Since the sound-insulating performance may be affected by a dynamic viscoelasticity of an intermediate film, and particularly may be influenced by a loss tangent that is a ratio of loss elastic modulus to storage elastic modulus, the sound-insulating performance of the laminated glass can also be improved by controlling this value.

Examples of means for controlling the value of the loss tangent like the latter include a method of using a film of a resin having a specific polymerization degree, a method of providing for the structure of a resin as described in Japanese Patent Application Laid-Open No. 231744/1992, and a method of providing for an amount of a plasticizer in a resin as described in Japanese Patent Application Laid-Open No. 2001-220183. It is known that the sound-insulating performance of the laminated glass can also be improved over a wide temperature range by forming an intermediate film by combining at least two resins different from each other. Examples thereof include a method of blending plural kinds of resins as described in Japanese Patent Application Laid-Open No. 2001-206742, a method of laminating plural kinds of resins as described in Japanese Patent Application Laid-Open Nos. 2001-206741 and 2001-226152, and a method of deflecting amount of a plasticizer in the intermediate film as described in Japanese Patent Application Laid-Open No. 2001-192243. These techniques are adopted, and means such as modification of the resin structure, addition of the plasticizer and combination of 2 or more resins are performed in suitable combination thereof, whereby the value of loss tangent, i.e., the sound-insulating property, of the resin material, of which the intermediate film should be formed, can be controlled.

In addition, the laminated glass preferably further has heat shield properties of other mechanism than cutting off of infrared rays as described above. As a method for improving the heat-insulating property in such a manner, may be mentioned a method of further containing fine oxide particles having a heat-insulating function in an intermediate film. As such a method, may be applied the methods described in, for example, Japanese Patent Application Laid-Open Nos. 2001-206743, 2001-261383 and 2001-302289.

Examples of the fine oxide particles capable of improving the heat-insulating property include tin-doped indium oxide (ITO), antimony-doped tin oxide (ATO) and aluminum-doped zinc oxide (AZO). Since the intermediate film, in which the fine oxide particles have been contained in such a manner, tends to low its light-transmitting property, a method for well retaining the light-transmitting property by making the particle diameter of the fine oxide particles small (Japanese Patent Application Laid-Open No. 2002-293583) or improving the dispersibility of the particles may also be adopted. As a method for improving the dispersibility of the fine oxide particles like the latter, may be applied any publicly known fine particle-dispersing technique such as mechanical dispersing of the fine particles or use of a dispersing agent.

A method of containing an organic dye having a heat-insulating function and a method of using a light-transmitting base plate having heat-insulating performance may be mentioned as examples of other methods than the method of containing the fine oxide particles as described above as method for improving the heat-insulating property of the laminated glass. Examples of the former method of containing the organic dye having the heat-insulating function include methods described in Japanese Patent Application Laid-Open No. 157344/1995 and Japanese Patent Registration No. 319271. Examples of the light-transmitting base plate having the heat-insulating performance in the latter method include, for example, such Fe-containing glass (for example, green glass) as described in Japanese Patent Application Laid-Open No. 2001-151539 and glass plates laminated with a metal or metal oxide as described in Japanese Patent Application Laid-Open Nos. 2001-261384 and 2001-226148.

As described above, the laminated glass 10 exhibits the property of cutting off infrared rays, which are heat rays, by absorbing light in a near infrared region by the infrared absorbent contained in the intermediate film 2. Incidentally, in order to further improve the infrared-cutting property, a reflective layer having the property of reflecting infrared rays may be further provided in addition to the infrared-absorbing layer.

Fig. 2 typically illustrates an exemplary sectional structure of a laminated glass having a reflective layer. This laminated glass 20 has a structure that a light-transmitting base plate 21, an infrared-absorbing layer 22, a reflective layer 23 and a light-transmitting base plate 21 are provided in this order. As the light-transmitting base plates 21 and infrared-absorbing layer 22, may be applied the same materials as those in the laminated glass 10 described above.

Examples of the reflective layer 23 include layers composed of a metal or metal oxide. As specific examples thereof, may be mentioned simple metal substances such as gold, silver, copper, tin, aluminum, nickel, palladium, silicon, chromium, titanium, indium and antimony, and alloys, mixtures and oxides thereof.

The laminated glass 20 having such a reflective layer 23 can be produced, for example, in the following manner. Namely, a light-transmitting base plate 21 provided with a reflective layer 23 on one surface thereof is first provided. As a method for forming the reflective layer 23 on the light-transmitting base plate 21, is mentioned a method of vapor-depositing a metal or metal oxide on the light-transmitting base plate 21. The light-transmitting base plate 21, on which the reflective layer 23 has been formed, is then arranged on one side of a sheet to become an infrared-absorbing layer 22 in such a manner that the reflective layer 23 comes into contact with the sheet, and only a light-transmitting base plate 21 is arranged on the other side of the sheet. These are then bonded under pressure, whereby the laminated glass 20 can be obtained.

When the reflective layer 23 is formed between the light-transmitting base plate 21 and the infrared-absorbing layer 22 in such a manner, the adhesiveness between the reflective layer 23 and the infrared-absorbing layer 22 may be lowered in some cases. In such a case, the light-transmitting base plate 21 tend to separate and fly off, for example, when the laminated glass 20 is broken, so that a problem is involved from the viewpoint of safety. From the viewpoint of avoiding such a problem, it is preferable to additionally provide a layer capable of controlling adhesive force, for example, between the infrared-absorbing layer 22 and the reflective layer 23 between them. By such a structure, the adhesiveness between the reflective layer 23 and the infrared-absorbing layer 22 can be improved. When the resin component contained in the infrared-absorbing layer 22 is, for example, polyvinyl acetal, as a means for enhancing the adhesive force, may be adopted a method of forming a layer composed of polyvinyl acetal having a higher acetalization degree than the infrared-absorbing layer 22 (see Japanese Patent Application Laid-Open Nos. 187726/1995 and 337446/1996), a layer composed of PVB having an acetoxy group in a specified proportion (see Japanese Patent Application Laid-Open No. 337445/1996), a layer composed of specified silicone oil (see Japanese Patent Application Laid-Open No. 314609/1995), or the like.

Incidentally, in the laminated glass, the reflective layer is not always required to be provided between the light-transmitting base plate and the infrared-absorbing layer as described above. For example, when a plurality of resin layers are provided between the light-transmitting base plates, the reflective layer may be provided between these layers.

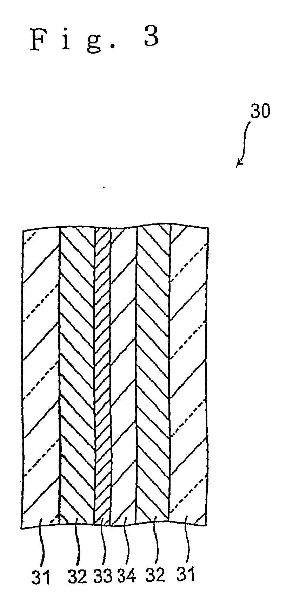

Fig. 3 typically illustrates an exemplary sectional structure of a laminated glass having a reflective layer between a plurality of layers provided between light-transmitting base plates. This laminated glass 30 has a structure that a light-transmitting base plate 31, an infrared-absorbing layer 32, a reflective layer 33, a resin layer 34, an infrared-absorbing layer 32 and a light-transmitting base plate 31 are provided in this order. In such a laminated glass 30, as the light-transmitting base plate 31, infrared-absorbing layers 32 and reflective layer 33, may be applied the same materials as those described above. As the resin layer 34, may be applied that composed of a publicly known resin material. Examples of such a resin material include polyethylene terephthalate and polycarbonate. Incidentally, in the laminated glass 30 of such a structure, it is only necessary to provide at least one infrared-absorbing layer 32. Accordingly, for example, one of the infrared-absorbing layers 32 described above may be a layer composed of a resin material having no infrared-absorbing property.

According to the structure that the reflective layer is further provided in addition to the infrared-absorbing layer, as described above, far excellent infrared-cutting property can be imparted to the glass laminates by the effect of both layers. When the method of improving the adhesiveness between the reflective layer and the infrared-absorbing layer is adopted as described above, it is possible to provide a laminated glass having excellent strength in addition to such infrared-cutting property.

When light including a heat ray component, such as sunlight, is incident on a laminate such as a laminated glass having the above-described structure, heat rays in a near infrared region (wavelength: about 700 to 1,200 nm) are cut off owing to the infrared-absorbing property developed by the infrared-absorbing layer that is an intermediate film. In general, the light in this wavelength region tends to cause a person to feel such scorching and irritative heat as the skin is burnt. However, the rays passed through the above-described laminate become mainly visible rays because such near infrared rays have been cut off. Accordingly, when such a laminate is used as a window material or the like, rise in interior or indoor temperature can be inhibited while taking in visible rays with good efficiency.

Since the laminated glass, which are such laminates as described above obtained by the infrared-absorbing resin composition according to the present invention, have excellent infrared-cutting performance as described above, they may be suitably used in various structural materials (not limited to building members) for taking in natural light such as sunlight, and other external light, for example, window materials for automobiles, ships, aircrafts or rolling stocks (railway), hood materials for passageways such as arcades, curtains, hoods for carports and garages, windows or wall materials for sunrooms, window materials for show windows and showcases, tents or window materials thereof, blinds, roof materials or materials of skylights or other windows for stationary or temporary dwellings, or the like, coating materials for coating surfaces of road signs or the like, materials for sun-screening members such as parasols, and other various members of which cut off of heat rays is required.

When the resin component of the infrared-absorbing resin composition according to the present invention is a moldable or formable resin such as an acrylic resin or polycarbonate resin, a molded or formed product can be obtained by molding or forming it utilizing a proper molding or forming method. When this molded or formed product is a light-transmitting plate, it is useful as a window material as it is. When it has high visible ray-transmitting property, it can be provided as a molded or formed product useful as an optical member such as an optical filter or lens.

An infrared-absorbing sheet or film formed by the infrared-absorbing resin composition according to the present invention is useful as a light-transmitting sheet material for constructing a greenhouse. According to a coating composition comprising the infrared-absorbing resin composition of the present invention, an infrared-absorbing thin film can be formed on a surface of a substrate by applying this composition to the substrate and drying the coating film.

According to the infrared-absorbing resin composition of the present invention, an infrared-absorbing composite is obtained by forming an infrared-absorbing and light-transmitting layer laminated on a light-transmitting base layer. According to this infrared-absorbing composite, it is useful as, for example, a building material that the excellent visible ray-transmitting property and infrared-absorbing property are stably retained over a long period of time because the infrared-absorbing and light-transmitting layer is composed of the infrared-absorbing resin composition.

In addition, the molded or formed product, infrared-absorbing sheet, infrared-absorbing film, infrared-absorbing composite or the like composed of the infrared-absorbing resin may be used as, for example, an optical material by itself. Besides, it may also be suitably used in combination with other optical parts or light-transmitting materials according to various objects or uses, whereby optical combined articles having optical properties including the infrared-absorbing property can be obtained, or optical systems utilizing optical properties including the infrared-absorbing property can be constructed.

When the infrared-absorbing compositions or infrared-absorbing resin compositions according to the present invention are prepared, or the applied products according to the present invention are produced, proper solvents may be used as needed, and specific examples thereof are as described above.

The present invention will hereinafter be described by the following Examples.

### [Example 1]

(1) Preparation of copper ion-containing compound:
   Into a solution obtained by dissolving 5.00 g of a phosphorus compound (product of Tokyo Kasei Kogyo Co., Ltd.) composed of an equimolar mixture of mono(2-ethylhexyl) phosphate and di(2-ethylhexyl) phosphate in 15 g of toluene, was added 2.37 g of copper acetate monohydrate, and acetic acid was removed while refluxing this solution. Toluene was further distilled out of the resultant reaction mixture to obtain 6.04 g of 2-ethylhexyl phosphate-copper complex that is a phosphate-copper compound.
(2) Production of sheet of infrared-absorbing resin composition:
   A polyvinyl butyral resin "S-lec BM-1" (product of Sekisui Chemical Co., Ltd.) as a resin material, 2-ethylhexyl phosphate-copper complex obtained in the item (1) as an infrared absorbent, lithium acetate dihydrate as an anti-blackening agent and triethylene glycol bis(2-ethylhexanoate) as a plasticizer were provided.
      Then, 8.4 g of the resin material was mixed with a solution with 1.2 g of the infrared absorbent and 0.02 g of the anti-blackening agent dissolved in 2.4 g of the plasticizer, and the resultant mixture was pressed 3 times at 85°C and additionally 3 times at 120°C by means of a pressing machine "WF-50" (manufactured by SHINTO METAL INDUSTRIES, LTD.) to conduct kneading and forming, thereby producing a sheet of the infrared-absorbing resin composition of thickness of 1 mm.
(3) Production of laminated glass:
   The sheet of the infrared-absorbing resin composition obtained in the item (2) was sandwiched between 2 slide glass plates each having size of 26 mm long, 76 mm wide and 1 mm thickness, and this laminate was subjected to a bonding treatment under pressure for 30 minutes under conditions of a temperature of 130°C and a pressure of 1.2 MPa by means of an autoclave to produce a laminated glass. This laminated glass is referred to as "Sample 1".

### [Examples 2 to 8]

Seven kinds of laminated glass in total were produced in the same manner as in Example 1 except that sodium bicarbonate, sodium benzoate, potassium acetate, potassium carbonate, cesium acetate, magnesium acetate and manganese acetate tetrahydrate were respectively used in place of lithium acetate dihydrate. These laminated glass are referred to as "Sample 2" to "Sample 8", respectively.

### [Example 9]

(1) Preparation of copper ion-containing compound:
   Into a solution obtained by dissolving 63.1 g of a phosphorus compound (product of Tokyo Kasei Kogyo Co., Ltd.) composed of an equimolar mixture of monooleyl phosphate and dioleyl phosphate in 180 g of toluene, was added 20.0 g of copper acetate monohydrate, and acetic acid was removed while refluxing this solution. Toluene was further distilled out of the resultant reaction mixture to obtain 80.4 g of oleyl phosphate-copper complex that is a phosphate-copper compound.
(2) Production of laminated glass:
   A sheet of the infrared-absorbing resin composition was produced in the same manner as in Example 4, in which the anti-blackening agent was potassium acetate, except that the oleyl phosphate-copper complex obtained in the item (1) was used in place of the infrared absorbent, and this sheet was used to produce a laminated glass in the same manner as in Example 1. This laminated glass is referred to as "Sample 9".

### [Examples 10 and 11]

### (1) Production of laminated glass:

Two kinds of sheet-like bodies of the infrared-absorbing resin composition were produced in the same manner as in Example 4, in which the anti-blackening agent was potassium acetate, except that the amount of the infrared absorbent in Example 4 was changed to 0.002 g and 0.00002 g, respectively, and these sheet-like bodies were respectively used to produce 2 laminated glass in the same manner as in Example 1. These laminated glass are referred to as "Sample 10" and "Sample 11", respectively.

### [Referential Example 1]

A referential laminated glass was produced in the same manner as in Example 1 except that no anti-blackening agent was used. This laminated glass is referred to as "Referential Sample 1".

### [Comparative Example 1]

A comparative laminated glass was produced in the same manner as in Example 1 except that an ultraviolet absorbent "BioSorb 90" (product of KYODO CHEMICAL CO., LTD.) represented by the following formula (6) was used in place of the anti-blackening agent. This laminated glass is referred to as "Comparative Sample 1".

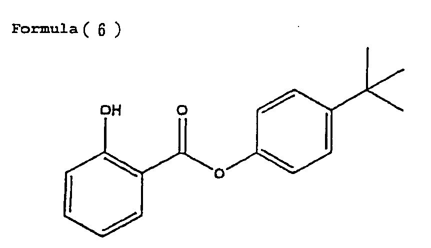

### [Experimental Example]

Each of the above-described Sample 1 to Sample 11, Referential Sample 1 and Comparative Sample 1 was exposed to irradiation of light containing ultraviolet rays over 100 hours by means of a xenon weatherometer "ATLAS C135" (manufactured by Toyo Seiki Seisaku-Sho, Ltd.) equipped with a xenon arc discharge lamp of electric power consumption of 7.5 kW under conditions of energy intensity of 0.85 W/m².

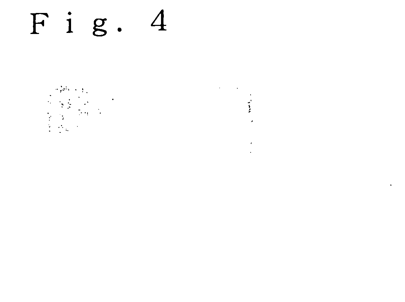

The respective samples after irradiation of the ultraviolet rays were visually observed as to whether a blackening phenomenon occurred or not. As a result, no occurrence of the blackening phenomenon was observed on Sample 1 to Sample 11. Fig. 4 illustrates a photograph of Sample 4 after irradiation of the ultraviolet rays.

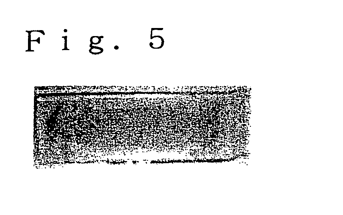

On the other hand, in Referential Sample 1, a great number of fine black particulate spots occurred, and so the occurrence of the blackening phenomenon was clearly observed. Fig. 5 illustrates a photograph of Referential Sample 1 after irradiation of the ultraviolet rays. In Comparative Sample 1, it was observed that clearness of the sample was lowered.

Visible ray transmittances measured before and after irradiation of the ultraviolet rays as to the respective samples, and rates of change in visible ray transmittance by the irradiation of the ultraviolet rays are shown in Table 1. This measurement was conducted by means of a spectrophotometer "U-4000" (manufactured by Hitachi Ltd.) in accordance with Japanese Industrial Standard (JIS) R 3106.

**Table 1**

| sample | infrared-absorbent (1.2g) | anti-blackiening agent, and so on | | visible ray transmittance (%) | | charge by irradiation of ultraviolet rays (%) |
|---|---|---|---|---|---|---|
| | kind | kind | amount (g) | before irradiation of ultraviolet rays | after irradiation of ultraviolet rays | |
| sample 1 | 2 - ethylhexyl phosphate-copper complex | lithium acetate dihydrate | 0.02 | 85.35 | 81.81 | 3.54 |
| sampler 2 | 2 - ethylhexyl phosphate-copper complex | sodium bicarbonate | 0.02 | 83.73 | 79.08 | 4.65 |
| Sample 3 | 2- ethylhexyl phosphate-copper complex | sodium benzoate | 0.02 | 85.63 | 82.88 | 2.75 |
| sample 4 | 2 - ethylhexyl phosphate-copper complex | potassium acetate | 0.02 | 84.80 | 82.97 | 1.83 |
| sample 5 | 2 - ethylhexyl phosphate-copper complex | potassium carbonate | 0.02 | 84.12 | 80.21 | 3.91 |
| sample 6 | 2 - ethylhexyl phosphate-copper complex | cesium acetate | 0.02 | 85.43 | 82.01 | 3.42 |
| sample 7 | 2 - ethylhexyl phosphate-copper complex | magnesium acetate | 0.02 | 83.03 | 79.94 | 3.09 |
| sample 8 | 2 - ethylhexyl phosphate-copper complex | maganese acetate tetra hydrate | 0.02 | 85.66 | 81.41 | 4.25 |
| sample 9 | oleyl phosphate-copper complex | potassium acetate | 0.02 | 85.36 | 81.95 | 3.41 |
| sample 10 | 2 - ethylhexyl phosphate-copper complex | potassium acetate | 0.002 | 84.85 | 80.52 | 4.33 |
| sample 11 | 2 - ethylhexyl phosphate-copper complex | potassium acetate | 0.00002 | 85.36 | 80.53 | 4.83 |
| referential example 1 | 2 - ethylhexyl phosphate-copper complex | n/a | - | 78.38 | 65.54 | 12.84 |
| comparative example 1 | 2 - ethylhexyl phosphate-copper complex | ultaravialet rays absorbent | 0.02 | 85.52 | 77.52 | 8.00 |

It is understood from the results of Sample 1 to Sample 11 which are shown in Table 1 according to the present invention, the anti-blackening agent composed of the metal salt compound is contained, whereby the occurrence of the blackening phenomenon is prevented even when ultraviolet rays was irradiated over a long period of time, and that changes in visible ray transmittance by the irradiation of the ultraviolet rays are less than 5%, and so excellent visible ray-transmitting property is stably retained.

On the other hand, it is understood that in Referential Sample 1, the blackening phenomenon occurs on this sample by the irradiation of the ultraviolet rays because no anti-blackening agent is contained, whereby the visible ray transmittance is lowered by no less than 12%.

It is also understood that in Comparative Sample 1, the effect to inhibit the occurrence of the blackening phenomenon is observed because the ultraviolet absorbent is contained, but the effect to inhibiting the lowering of the visible ray transmittance is little.

## Claims

1. An infrared-absorbing composition comprising an infrared absorbent composed of a divalent ionic copper compound and an anti-blackening agent composed of a metal salt compound for preventing a blackening phenomenon due to the infrared absorbent.

2. The infrared-absorbing composition according to claim 1, wherein the metal salt compound making up the anti-blackening agent is a compound of at least one metal selected from alkali metals, alkaline earth metals and transition metals.

3. The infrared-absorbing composition according to claim 1, wherein the metal salt compound making up the anti-blackening agent is a compound of lithium, sodium, potassium, cesium, magnesium, calcium or manganese.

4. The infrared-absorbing composition according to any one of claims 1 to 3, wherein the divalent ionic copper compound is a phosphorus-containing copper compound.

5. The infrared-absorbing composition according to claim 4, wherein a phosphorus compound contained in the phosphorus-containing copper compound is an alkyl phosphate.

6. The infrared-absorbing composition according to claim 5, wherein the alkyl phosphate is a compound the alkyl group of which has 4 to 18 carbon atoms.

7. An infrared-absorbing resin composition comprising an infrared absorbent composed of a divalent ionic copper compound and an anti-blackening agent composed of a metal salt compound for preventing a blackening phenomenon due to the infrared absorbent, which are contained in a resin component.

8. The infrared-absorbing resin composition according to claim 7, wherein a proportion of the infrared absorbent is 0.1 to 45 parts by mass per 100 parts by mass of the resin component, and a proportion of the anti-blackening agent is 0.01 to 200 % by mass based on a divalent copper ion in the infrared absorbent.

9. The infrared-absorbing resin composition according to claim 7 or 8, wherein the resin component comprises a resin having an acetal structure.

10. The infrared-absorbing resin composition according to claim 7 or 8, wherein the resin component comprises a polyvinyl acetal resin.

11. The infrared-absorbing resin composition according to any one of claims 7 to 10, wherein the metal salt compound making up the anti-blackening agent is a compound of at least one metal selected from alkali metals, alkaline earth metals and transition metals.

12. The infrared-absorbing resin composition according to any one of claims 7 to 10, wherein the metal salt compound making up the anti-blackening agent is a compound of lithium, sodium, potassium, cesium, magnesium, calcium or manganese.

13. The infrared-absorbing resin composition according to any one of claims 7 to 12, wherein the divalent ionic copper compound is a phosphorus-containing copper compound.

14. The infrared-absorbing resin composition according to claim 13, wherein a phosphorus compound contained in the phosphorus-containing copper compound is an alkyl phosphate.

15. The infrared-absorbing resin composition according to claim 14, wherein the alkyl phosphate is a compound the alkyl group of which has 4 to 18 carbon atoms.
